# EUROPÄISCHE PATENTSCHRIFT

(11) **EP 2 872 849 B1**
(45) Veröffentlichungstag und Bekanntmachung des Hinweises auf die Patenterteilung: **27.04.2016**
(21) Anmeldenummer: 13759421.4
(22) Anmeldetag: 08.07.2013
(51) Int. Cl.: F41A 17/44

(54) **SICHERUNGSSYSTEM BEI EINER HANDFEUERWAFFE GEGEN UNBERECHTIGTE BENUTZUNG**
SAFETY SYSTEM FOR A HAND GUN TO PREVENT UNAUTHORIZED USE
SYSTÈME DE PROTECTION CONTRE UNE UTILISATION NON AUTORISÉE D'UNE ARME À FEU PORTATIVE

(30) Priorität: 16.07.2012 DE 102012014400
(43) Veröffentlichungstag der Anmeldung: 20.05.2015
(73) Patentinhaber: Sauer, Siegbert, 01257 Dresden (DE); Gersten, Klaus, 01239 Dresden (DE); Körner, Jürgen, 01796 Pirna (DE); Schade, Uwe-Thomas, 01640 Coswig-Sörnewitz (DE)
(72) Erfinder: KÖRNER, Jürgen, 01796 Pirna (DE); SCHADE, Uwe-Thomas, 01640 Coswig-Sörnewitz (DE)
(74) Vertreter: Gerber, Wolfgang
(86) Internationale Anmeldenummer: PCT/DE2013/000379
(87) Internationale Veröffentlichungsnummer: WO 2014/012529

(56) Entgegenhaltungen:
- WO-A1-2011/070064
- US-A- 4 398 366
- US-A- 5 361 526

## Beschreibung

Die Erfindung bezieht sich auf ein Waffensicherungssystem mit fertigungstechnisch günstigem Aufbau und verbessertem Gebrauchswert bei der Handhabung und Sicherung des Laufes einer Handfeuerwaffe mit gattungsmäßig blockierten Patronenlager vor Entfernung des Verschlusses des Patronenlagers, mit dem Ziel der Verhinderung der unberechtigten Inbetriebnahme der Waffe.

Anordnungen der gattungsmäßig als Sicherheitsstöpsel, zum Beispiel Verschließen der Patronenkammer (IPK F41A 17/44) genannten Art, sind mit der DE19957160C1, der DE29920895U1 oder auch der DE29920918U1 bekanntgeworden. Sie ermöglichen es, einen in das Patronenlager oder den Lauf eine Handfeuerwaffe einsetzbare Blockierungsanordnung vor unberechtigtem Entfernen derart zu sichern, dass diese ohne aufwendige Spezialwerkzeuge nur mit der Folge der Zerstörung von Patronenlager und Lauf zu erreichen ist.

So wurde mit der DE19957160C1 vorgeschlagen, in das Patronenlager des Laufes einer Handfeuerwaffe einen beidseitig als Spreizhülse ausgebildeten Einsatz einzusetzen. In beiden Enden der Spreizhülse sind vorgespannte Spreizdorne eingesetzt, so dass sich bei axialer Druckausübung auf die Spreizdorne diese in der Innenwandung des Laufes und des Patronenlagers verhaken und damit letztlich die Waffe zerstört wird. Das befugte Lösen dieser Sicherungsanordnung soll nur durch einen Fachmann mit Zugriff auf Spezialwerzeuge, wie ein Elektroerosionsgerät, möglich sein, indem dieser nur mit solchem Werkzeug an den Spreizdornen angeordnete Sicherungsscheiben entfernen, damit Zugang zum Lösen der Vorspannung der Spreizdorne erhält und danach die entspannte Sicherungsanordnung zerstörungsfrei aus den Patronenlager ziehen kann.

Nachteil einer solchen Lösung zur Sicherung einer Handfeuerwaffe vor unberechtigter Inbetriebnahme ist es, dass der zur Entfernung der Sicherungsanordnung genannte Fachmann als solcher vom Hersteller der Sicherungsanordnung nicht als Berechtigter konkret hinsichtlich der zum Lösen der Sicherungsanordnung einzusetzenden Mittel definierbar ist. Unbefugte Angriffe auf die Sicherungsanordnung in Unkenntnis der Funktion der Sicherungsanordnung erfüllen zwar das Sicherheitsinteresse durch Verhindern der Inbetriebnahme der Waffe, führen aber andererseits zum dauernden Wertverlust an der Waffe.

Mit der US 7 832 136 B2 wurde ein Sicherungssystem vorgeschlagen, das bei unberechtigter Benutzung eine Blockierung der Waffe durch Ausdehnung eines Hohlkörpers im Patronenlager bewirkt. Dieses lediglich für Waffen mit MasseTrägheitsverschluss einsetzbare Sicherungssystem kann in Hinsicht auf die Konizität des Patronenlagers auch ohne den Einsatz von Spezialwerkzeug verhältnismäßig leicht und ohne Beschädigung der Waffe auch von einen Nichtberechtigten entfernt werden.

Die US 4 398 366 A, welche einen Ausgangspunkt für den Patentanspruch 1 bildet, zeigt ein rein mechanisch aufgebautes Laufsicherungssystem mit Zahlenschlosskombination. Die dabei eingesetzte Verriegelungskartusche ist allerdings nur für solche Waffen geeignet, die Patronen mit Rand verschießen. Der Einsatz beschränkt sich damit nur auf Revolver. Nachteil dieses Laufsicherungssystems ist die Möglichkeit der Beseitigung ohne Spezialwerkzeuge, ohne eine damit verbundene Beschädigung der Waffe. Beim Hantieren am Sicherungssystems können außerdem die in der Kartusche verriegelten Kugeln die Kartusche derart ausdehnen, dass die Waffe völlig zerstört werden kann.

Das mit der US 4 224 753 A vorgeschlagene Sicherungssystem besteht aus mehreren Einzelteilen, deren Handhabung durch das Erfordernis des teilweisen Zerlegens der Waffe vor dem Einsetzen desselben umständlich ist. Ein weiterer Nachteil dieses Sicherungssystems besteht darin, dass der Verschluss nach dem Einsetzen nicht mehr lösbar ist, ohne den Patronenzieher zu zerstören oder den Rand der Patrone abzureißen. Ein weiterer Sicherheitsmangel ist die Verriegelung oder Entriegelung der Waffe nur mittels eines einfachen Schlüssels.

Die US 5 664 358 A weist als Sicherungssystem ein Spreizsystem für das Patronenlager der Waffe in Verbindung mit einer an der Laufmündung angeordneten Zahlenschlosskombination zum Ent- und Verriegeln der Waffe auf. Das vorgeschlagene Spreizsystem kann leicht, insbesondere beim gewaltsamen Hantieren, zur Beschädigung der Patronenlagerwandung, des Übergangskonusses sowie der Laufinnenwandung führen.

Mit der DE 10 2006 011 266 B4 wird ein elektronisch gesichertes Blockiersystem vorgeschlagen, dessen Verriegelungssystem im Patronenlager bei jeder Benutzung, insbesondere bei älteren Waffen mit weichen Laufstählen, starke Verschleißerscheinungen der Patronenlagerinnenwandungen bis hin zu plastischen Umformungen hinterlässt. Insgesamt haben elektronisch gesteuerte Verriegelungen den Nachteil, allein durch den Einfluss des Magnetfeldes bei angesetzter Lichtbogenschweißung zerstörbar zu sein.

Ziel der Erfindung ist es, ein Waffensicherungssystem derart auszubilden, dass es einerseits im Alltag bewaffneter Dienste, aber andererseits auch von Jägern, Sportschützen Waffensammlern, Waffenerben-und ähnliche berechtigten Personen, durch Sicherheit in der Anwendung und kostengünstige Herstellung für die meisten Waffenarten und Kaliber einsetzbar ist. Das Entfernen eines ausgelösten Sicherungssystem soll gewöhnlich nur einer solchen berechtigten Person vorbehalten bleiben, die über ein vom Hersteller auf das jeweilige Sicherungssystem abgestimmtes Mittel zu dessen Lösen verfügt.

Gelöst wird die Aufgabe mit den Merkmalen des Anspruchs 1. Vorteilhafte Ausgestaltungen sind in den Unteransprüchen ausgeführt.

Im Wesentlichen werden bei einer im Patronenlager einer Handfeuerwaffe eingesetzten und verriegelten Blockierkartusche bei deren Manipulation in einer innen befindlichen Reaktonskammer die Einzelkomponenten eines Klebstoffsystems zusammengebracht, wonach nach Reaktion dieser Komponenten das noch pastöse Klebstoffsystem sich ausdehnend durch Öffnungen in der Wandung der Blockierkartusche austritt und diese nach dem Erhärten mit dem Patronenlager fest verklebt. Das Lösen der Blockierkartusche soll nur mit einen auf die Zusammensetzung des Klebstoffsystems herstellerseitig abgestimmten verbindungslösenden Technologie durch eine damit belieferte berechtigte Institution oder Person möglich sein.

In weiterer Ausgestaltung der Erfindung enthält die Blockierkartusche im Inneren eine Reaktionskammer zur Aufnahme der zunächst voneinander getrennten Einzelkomponenten des Klebstoffsystems in der Art einer Bereitschaftsstellung und zum Verschmelzen dieser Komponenten beim Auslösen des Sicherungssystems. Austrittsöffnungen in der Wandung der Blockierkartusche ermöglichen das sich bei Reaktion ausdehnenden Klebstoffsystem von der Reaktionskammer zum Patronenlager zu gelangen und sich mit diesem fest zu verkleben.

Die Verriegelung der Blockierkartusche im Patronenlager sowie die Auslösung des Sicherungssystems bei Manipulation erfolgt im einfachsten Fall mit einem mechanischen System, bestehend aus einem an der Blockierkartusche angeordnete Schließanordnung mit Schlüsselloch, einem darin eingreifenden, im Lauf der Waffe axial verdrehbaren Verbindungsstab mit zur Schließanordnung der Blockierkartusche passenden Schlüsselbart und einen die Laufmündung der Waffe abschließenden und den Verbindungsstab aufnehmenden Verschlusskegel, dieser vorteilhaft als kegelstumpfförmiges Zahlencodeschloss mit mehreren Einstellringen ausgebildet.

Das Sicherungssystem wird scharf gestellt, indem in das Patronenlager der Handfeuerwaffe die Blockierkartusche eingebracht wird und der Verschluss der Waffe geschlossen wird. Von der Laufmündung her wird der Verbindungsstab in den Lauf eingeführt, bis dessen Schlüsselbart in die Schließanordnung der Blockierkartusche eingetreten ist. Nach der richtigen Einstellung der Codierung des die Laufmündung abdeckenden Verschlusskegels mit integrierten Schloss, ist dieses mit dem Verbindungsstab verriegelt. Durch Drehen des Schlosses wird der Schlüsselbart des Verbindungsstabes in der Schließeinrichtung der Blockierkartusche verriegelt. Das Sicherungssystem kann nunmehr nur noch durch eine berechtigte Person in Kenntnis der richtigen Codierung des Schlosses im Verschlusskegel vor der Laufmündung in umgekehrter Reihenfolge entfernt werden.

Wird das Sicherungssystem manipuliert, dies in der Regel durch gewaltsames Verkanten des Verschlusskegels oder axialen Zug am Schloss in Richtung Laufmündung oder nach Öffnen des Verschlusses der Waffe durch den Versuch des gewaltsamen Auswerfens der Blockierkartusche mit dem Patronenzieher der Waffe, werden die in der Reaktonskammer der Blockierkartusche befindlichen Aufbewahrungsbehälter der Einzelkomponenten des Klebstoffsystems im einfachsten Fall mechanisch zerstört, womit nach Vermischung derselben und Reaktion miteinander das noch pastöse und sich ausdehnende Klebstoffsystem durch die Austrittsöffnungen in der Wandung der Blockierkartusche zum Patronenlager gepresst wird und dort aushärtet. Die Blockierkartusche ist somit mit dem Patronenlager fest verklebt. Die zu sichernde Handfeuerwaffe ist damit zunächst unbrauchbar geworden.

Das Lösen der Verklebung erfolgt durch Wirksamwerden einer verbindungslösenden Technologie, wie dem Auflösen des Klebstoffsystems durch Einwirkung eines Lösungsmittels. Dieses Lösungsmittel kann vorteilhaft bereits vom Hersteller des Klebstoffsystems auf dessen Zusammensetzung abgestimmt und steht nur der für die Lösung des Sicherheitssystems autorisierten Stelle oder Person zur Verfügung. Die variable Einstellung der Zusammensetzung des Klebstoffsystems, verbunden mit der darauf abgestimmten Zusammensetzung des Lösungsmittels, erhöht erheblich die Sicherheit vor Lösen des Sicherungssystems durch unberechtigte Personen.

Die Erfindung wird im folgenden noch anhand des in der Zeichnung auszugsweise und teilweise schematisch dargestellten Ausführungsbeispiel näher erläutert. Es zeigen
Fig. 1 eine mit dem Sicherungssystem versehene Handfeuerwaffe
Fig. 2 die perspektivische Ansicht der Blockierkartusche mit Schlüsselloch
Fig. 3 die Blockierkartusche, mit Schlüssel verriegelt, im Patronenlager der Handfeuerwaffe liegend
Fig. 4 der Verbindungsstab mit Schlüsselbart und Schloß

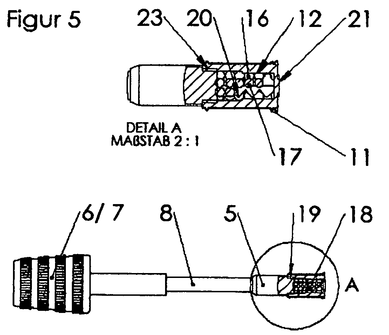

Fig. 5 die Aktivierungsanordnung mit Abrissgewinde nebst Detaildarstellung
Fig. 6 die Aktivierungsanordnung mit Schlagspitze nebst Detaildarstellung

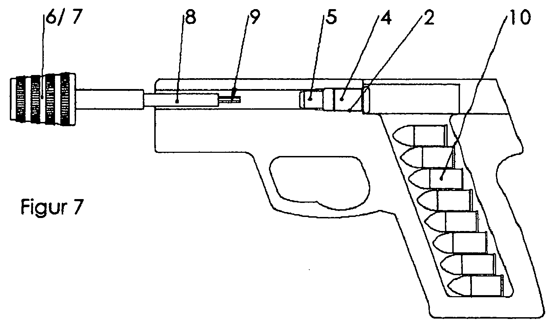

Fig. 7 das Sicherungssystem nach Manipulation
Fig. 8 das Sicherungssystem mit Zündhütchen und Schlagspitze
Fig. 9 das Sicherungssystem mit Zündhütchen im Schnitt
Fig. 10 das Sicherungssystem mit Zündhütchen, Detail

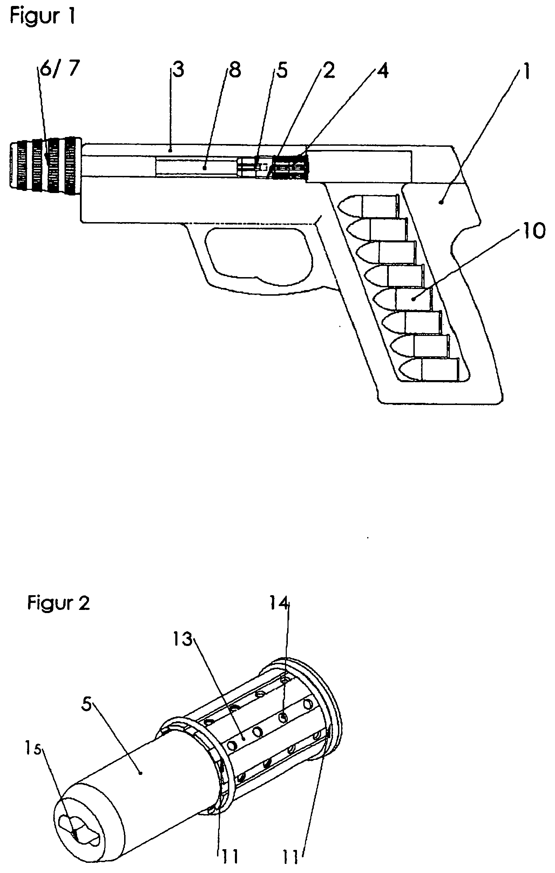

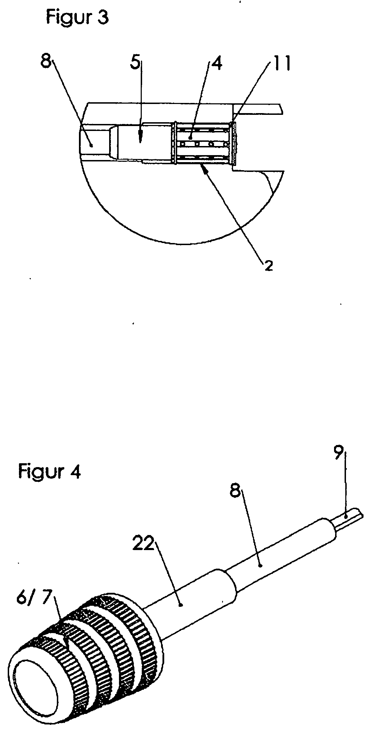

Fig. 1 zeigt schematisch das erfindungsgemäß vorgeschlagene Sicherungssystem am Beispiel einer gegen unberechtigte Inbetriebnahme gesicherten Pistole 1. Es besteht im Wesentlichen aus einer im Patronenlager 2 des Laufes 3 eingesteckten Blockierkartusche 4 mit daran angeschlossener Schließanordnung 5, einen die Mündung des Laufes 3 abdeckenden Verschlusskegels 6 mit Schloss 7 sowie, wie auch Fig. 4 zeigt, einen im Lauf 3 zwischen Schließanordnung 5 der Blockierkartusche 4 und dem Verschlusskegel 6 eingesteckten Verbindungsstab 8 mit Schlüsselbart 9.

Wie mit Fig. 2 perspektivisch dargestellt, weist die den Kartuschen der regulären Patronen 10 der Pistole 1 in Kaliber gleich ausgebildete Blockierkartusche 4 im Inneren eine Reaktionskammer 12 auf und ist mit der zur Mündung des Laufes 3 gerichteten, angeschlossenen Schließanordnung 5 starr verbunden. Die Reaktionskammer 12 befindet sich innerhalb der Blockierkartusche 4, wobei deren Wandung, wie Fig. 2 zeigt, außen mit Längsnuten 13 und innerhalb dieser Längsnuten 13 mit die Wandung durchdringenden Austrittsöffnungen 14 versehen sind.

Die an der Blockierkartusche 4 angeordnete Schließanordnung 5 ist, wie Fig. 4 zeigt, im Ausführungsbeispiel mit einem Schlüsselloch 15 versehen, das dem Schlüsselbart 9 des Verbindungsstabes 8 entsprechend ausgebildet ist. Mündungsseitig des Laufes 3 greift der Verbindungsstab 8 in den Verschlusskegel 6 ein und ist dort mit diesem mittels des Schlosses 7 verriegelbar.

Die innen in der Blockierkartusche 4 befindliche Reaktionskammer 12 enthält, im einfachen Fall, in leicht aufreißbaren Behältern 16 gefüllt, Einzelkomponenten 17 eines Klebstoffsystems 18.

Des Weiteren greift in die Reaktonskammer 12 der Blockierkartusche 4 eine Aktivierungsanordnung 19 zum Aufreißen der die Komponenten 17 des Klebstoffsystems 18 enthaltenden Behälter 16 ein, im Ausführungsbeispiel im Wesentlichen aus einer Zugmesseranordnung 20 oder auch einer Schlagspitze 25 bestehend.

Der die Mündung des Laufes 3 abdeckende Verschlusskegel 6 ist im Ausführungsbeispiel vor der Laufmündung zur Erschwerung des unberechtigten Werkzeugangriffs kegelstumpfförmig ausgebildet und mit einem vorteilhaft als Zahlencodeschloss ausgebildeten Schloß 7 versehen.

Das Sicherungssystem wird an der für das Ausführungsbeispiel ausgewählten Pistole 1 derart angebracht, dass nach dem Öffnen des Verschlusses der Pistole 1 zunächst die Blockierkartusche 4 in das Patronenlager 2 des Laufes 3 eingesetzt wird. Nach dem Schließen des Verschlusses der Pistole 1 wird der mit dem Verschlusskegel 6 versehene Verbindungsstab 8 in den Lauf 3 der Pistole 1 eingesteckt, bis dessen Schlüsselbart 9 in das Schlüsselloch 15 der an der Blockierkartusche 4 befindlichen Schließanordnung 5 eingreift

Während der Verschlusskegel 6 bei unzutreffender Einstellung des programmierten Schlosses 7 auf dem Verbindungsstab 8 leer verdrehbar ist, wird dieser bei zutreffender Einstellung des Schlosses 7 mit dem Verschlusskegel 6 arretiert. Durch Drehen des Verschlusskegels 6 ist nunmehr mittels der an der Blockierkartusche 4 befindlichen Schließanordnung 5 der Schlüsselbart 9 des Verbindungsstab 8 auch in der Schließanordnung 5 der Blockierkartusche 4 verdrehbar. Die Blockierkartusche 4 ist somit im Patronenlager 2 der Pistole 1 arretiert und kann nur in umgekehrter Reihenfolge bei Eingabe der richtigen Codierung des Schlosses 7 wieder entfernt werden.

Die Blockierkartusche 4 kann mit einem oder mehreren O-Ringen 11 versehen sein, damit die Haftung gegenüber dem Patronenlager 2 verbessernd und das übermäßige Eindringen des Klebstoffsystems 18 in den Lauf 3 oder den Waffenverschluss vermeidend.

Nicht Gegenstand der Erfindung, jedoch eine vorteilhafte Ausgestaltung für die Praxis ist es, den Boden der Blockierkartusche 4 mit einem Hartgummieinsatz 21 zu versehen, so dass die Blockierkartusche 4 noch die Funktion einer Pufferpatrone zum Abschlagen und Entspannen der Schlagfeder der Pistole 1 übernehmen kann.

Weiterhin nicht Gegenstand der Erfindung, jedoch ebenso vorteilhaft für die Praxis ist es, den Verschlusskegel 6 als Mündungsschoner sowie den Verbindungsstab 8 als Laufreiniger durch auf dessen Oberfläche angebrachte Filze 22 oder ähnliches auszubilden.

Ein Angriff auf das Sicherungssystem wird hauptsächlich als gewaltsames Herausziehen des Verbindungsstabes 8 unter Werkzeugeinsatz am Verschlusskegel 6 oder nach dem Öffnen des Verschlusses der Pistole 1 durch gewaltsames Auswerfen der Blockierkartusche 4 mittels des Patronenziehers der Pistole 1 selbst oder dort ebenso unter Werkzeugeinsatz am Boden der Blockierkartusche 4 in Erscheinung treten.

Mittels der Aktivierungsanordnung 19, im Ausführungsbeispiel bestehend aus einen innerhalb der Reaktonskammer 12 als Sollbruchstelle ausgebildete Gewindeverbindung 23 zwischen Blockierkartusche 4 und Schließanordnung 5, ist eine an der mit der Schließanordnung 5 verbundenen und in die Reaktionskammer 12 eingreifenden Zugmesseranordnung 20 in die Reaktionskammer 12, die Behälter 16 aufreißend, bewegbar. Die sich vermischenden Einzelkomponenten 17 reagieren miteinander, wobei sich das zunächst noch pastöse Klebstoffsystem 18 ausdehnt und durch die Austrittsöffnungen 14 und über die Längsnuten 13 zur Wandung des Patronenlagers 2 gepresst wird. Das Klebstoffsystem 18 härtet aus, womit die Pistole 1 gebrauchsunfähig wird.

Wird der Manipulierungsversuch an der Blockierkartusche 4 selbst angesetzt, kommt es beim Versuch des gewaltsamen Entfernens aus dem Patronenlager 2 derselben ebenfalls nach Abreißen der Gewindeverbindung 23 zur Bewegung der Zugmesseranordnung 20 innerhalb der Reaktionskammer 12, mit der Folge der Zerstörung der die Einzelkomponenten 17 enthaltenden Behälter 16 des Klebstoffsystems 18 und dessen Austritt in das Patronenlager 2.

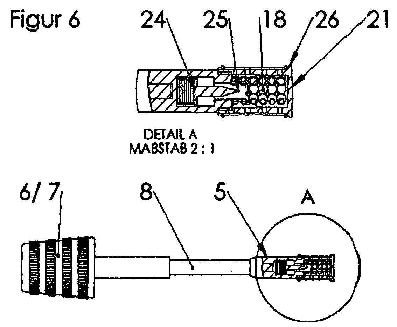

Die Aktivierungsanordnung 19 kann auch, wie Fig. 6 zeigt, derart ausgebildet sein, dass eine vorgespannten Zugriegelanordnung 24 bei axial einwirkender Zugkraft eine in die Reaktionskammer 12 eindringende Schlagspitze 25 zur Zerstörung der Behälter 16 mit dem Klebstoffsystem 18 auslöst.

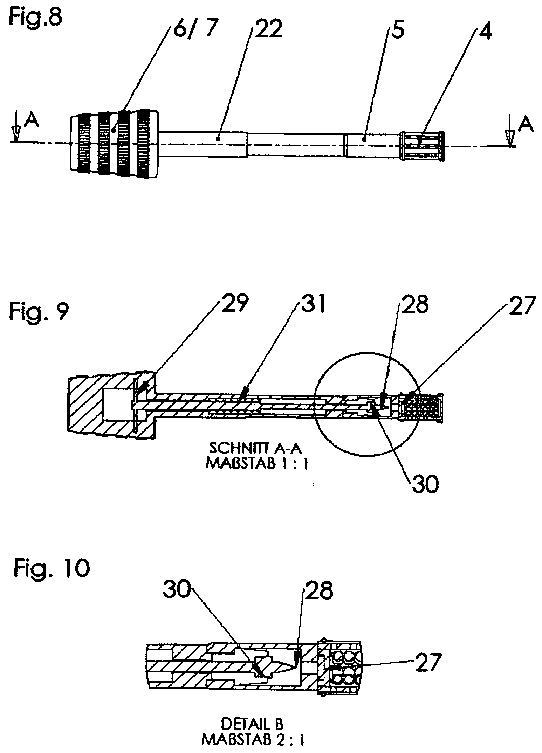

Eine weitere vorteilhafte Ausgestaltung der Erfindung zeigt Fig. 8 bis 10. Hierbei ist vor der Reaktionskammer 12 der Blockierkartusche 4 ein Initialsprengstoff, insbesondere ein Zündhütchen 27 angeordnet. Im Falle der Manipulation der Arretierung schlägt ein über einen Scherstift 29 freigegebener, mittels Feder 31 vorgespannter Spreizkonus 30 mit angearbeiteten oder darin axial beweglich geführten Schlagbolzen 28 gegen das Zündhütchen 27, womit der in der Reaktionskammer 12 entstehende Detonationsdruck eine Vermischung der dort befindlichen Einzelkomponenten 17 des hier auch vorteilhaft in Granulatform einsetzbaren Klebstoffsystems 18 bewirkt. Die während der Detonation des Initialsprengstoffes entstehende Druckwelle drückt außerdem das Zündhütchen 27 aus seinem Lager in der Blockierkartusche 4 und schiebt damit den Spreizkonus 30 in seine Ausgangsstellung zurück. Das Sicherungssystem ist damit in Bruchteilen einer Sekunde zusätzlich verriegelt.

Zur Abwehr des Herausziehens der Blockierkartusche 4 aus dem Patronenlager 2 mittels des am Bund der Kartusche angreifenden Patronenziehers oder zur Vermeidung der Auslösung der Aktivierungsanordnung 19 beim Öffnen des Schlusses der Pistole 1, kann der Bund 26 der Blockierkartusche 4 ganz oder teilweise radial verkürzt und abgeschrägt ausgebildet sein.

Nach dem Auslösen des Sicherheitssystems mit der Folge des Verklebens des Patronenlagers 2 mit der Blockierkartusche 4 kann die Funktionsfähigkeit der Pistole 1 zerstörungsfrei wiederhergestellt werden, indem in den verklebten Bereich ein auf die Zusammensetzung des Klebstoffsystems 18 abgestimmtes , im Ausführungsbeispiel nicht näher dargestelltes Wirksamwerden einer verbindungslösenden Technologie, vorteilhaft unter Verwendung eines Lösungsmittels, eingebracht wird.

Die Zusammensetzung und damit die Wirksamkeit des Lösungsmittels kann dabei vom Hersteller auf die Zusammensetzung des Klebstoffsystems 18 abgestimmt sein, so dass nur solchen berechtigten Stellen oder Personen das Lösungsmittel optimal zur Verfügung steht, die den Einsatz des Sicherungssystems zu verantworten haben.

## Patentansprüche

1. Sicherungssystem bei einer Handfeuerwaffe gegen unberechtigte Benutzung, umfassend einen in das Patronenlager (2) der zu schützenden Handfeuerwaffe (1) formschlüssig und verriegelbar einsetzbaren Behälter (4), **dadurch gekennzeichnet, dass** im Behälter ein innenliegender Vorrat an Einzelkomponenten (17) eines Klebstoffsystems (18) vorgesehen ist, dessen Einzelkomponenten (17) im Falle eines unsachgemäßen Öffnungs- und Manipulationsversuches der Verriegelung durch damit auslösbare Vermischung der Einzelkomponenten (17) des Klebstoffsystems (18) durch Öffnungen (14) in der Wandung des Behälters (4) sich ausdehnend in das Patronenlager (2) austritt und dieses bis zum Wirksamwerden einer verbindungslösenden Technologie die weitere Benutzung der Handfeuerwaffe (1) verhindernd, mit dem Behälter (4) verklebt.

2. Sicherungssystem nach Anspruch 1, **dadurch gekennzeichnet, dass** der Behälter (4) eine der Patronenkartusche der zu schützenden Handfeuerwaffe (1) nachgebildete Blockierkartusche (4) ist, die in deren Patronenlager (2) einsetzbar ist, wobei die mit Durchlässen (14) versehene Wandung der Blockierkartusche (4) eine Reaktionskammer (12) mit darin befindlichen Vorrat an Einzelkomponenten (17) des Klebstoffsystems (18) sowie eine Aktivierungsanordnung (19) zur Vermischung der Einzelkomponenten (17) des Klebstoffsystems (18) bei Manipulation des Sicherungssystems enthält und dass die Blockierkartusche (4) über eine mündungsseitig angeschlossene Schließanordnung (5), einen im Lauf der Handfeuerwaffe (1) axial verdrehbar geführten Verbindungsstab (8) mit in die Schließanordnung (5) eingreifbaren Schlüsselbart (9) und über einen die Mündung der Handfeuerwaffe (1) im Wesentlichen außen abdeckenden Verschlusskegel (6) mit Schloss (7) verriegelbar ist.

3. Sicherungssystem nach Anspruch 2, **dadurch gekennzeichnet, dass** die Schließanordnung (5) als Drehschloss zur Aufnahme und Verriegelung eines am Verbindungsstab (8) angeordneten Schlüsselbarts (9) ausgebildet ist.

4. Sicherungssystem nach Anspruch 2 oder 3, **dadurch gekennzeichnet, dass** der Verschlusskegel (6) selbst als Zahlenkombinationsschloß ausgebildet ist.

5. Sicherungssystem nach Anspruch 2 bis 4, **dadurch gekennzeichnet, dass** die Aktivierungsanordnung (19) zur Vermischung der Komponenten (17) des Klebstoffsystems (18) als eine leicht axial abreissbare Gewindeverbindung (23) zwischen der Schließanordnung (5) und der Blockierkartusche (4) ausgebildet ist und die Schließanordnung (5) mit einer in die Reaktionskammer (12) einragenden Zugmesseranordnung (20) versehen ist.

6. Sicherungssystem nach Anspruch 2, **dadurch gekennzeichnet, dass** das Aktivierungssystem zur Vermischung der Einzelkomponenten (17) des Klebstoffsystems (18) als vorspannbare Zugriegelanordnung (24) mit in die Reaktionskammer (12) einschlagbarer Schlagspitze (25) ausgebildet ist.

7. Sicherungssystem nach Anspruch 2, **dadurch gekennzeichnet, dass** das Aktivierungssystem zur Vermischung der Einzelkomponenten (17) des Klebstoffsystems (18) als ein in der Blockierkartusche (4) vor der Reaktionskammer (12) angeordnetes Zündhütchen (27) mit über Scherstift-Feder-Anordnung (29, 31) auslösbaren, in dieses einschlagbaren Schlagbolzen (28) ausgebildet ist.

8. Sicherungssystem nach Anspruch 2, **dadurch gekennzeichnet, dass** die zylindrische Wandung der Blockierkartusche (4) mit ein bis mehreren O-Ringen (11) aus elastischen Material versehen sind.

9. Sicherungssystem nach Anspruch 2, **dadurch gekennzeichnet, dass** der der Blockierkartusche (4) der Handfeuerwaffe (1) nachgebildete Bund (26) der Blockierkartusche (4) radial verkürzt und abgeschrägt ausgebildet ist.

10. Sicherungssystem nach Anspruch 2, **dadurch gekennzeichnet, dass** der Boden der Blockierkartusche (4) mit einer Hartgummiauflage (21) versehen ist.

11. Sicherungssystem nach Anspruch 2 **dadurch gekennzeichnet, dass** der Verbindungsstab (8) mit einer Filzauflage (22) versehen ist.

## Claims

1. Safety system for a hand gun to prevent unauthorized use, comprising a container (4) for insertion with positive locking and so as to be lockable in the cartridge chamber (2) of the hand gun (1) to be protected, **characterized in that** an internal supply of individual components (17) of an adhesive system (18) is provided in the container, the individual components (17) thereof, in the event of an improper opening and manipulation attempt on the locking means, by mixing of the individual components (17) of the adhesive system (18) triggered thereby, escaping through openings (14) in the wall of the container (4) by expansion into the cartridge chamber (2) and adhering the same to the container (4), preventing further use of the hand gun (1) until the activation of a joint-dissolving technology.

2. Safety system according to Claim 1, **characterized in that** the container (4) is a blocking cartridge (4) modelled on the cartridge of the hand gun (1) to be protected that is insertable into its cartridge chamber (2), wherein the wall of the blocking cartridge (4), which is provided with passages (14), contains a reaction chamber (12) with a supply of individual components (17) of the adhesive system (18) located therein and an activation arrangement (19) for mixing the individual components (17) of the adhesive system (18) in the event of manipulation of the safety system and **in that** the blocking cartridge (4) can be locked by means of a locking system (5) connected on the muzzle side, a connecting rod (8) axially rotatably guided in the barrel of the hand gun (1) with a key bit (9) that can engage within the locking device (5) and by means of a closure cone (6) with a lock (7) essentially externally covering the muzzle of the hand gun (1).

3. Safety system according to Claim 2, **characterized in that** the locking system (5) is in the form of a rotary lock for accepting and locking a key bit (9) that is disposed on the connecting rod (8).

4. Safety system according to Claim 2 or 3, **characterized in that** the closure cone (6) itself is in the form of a numerical combination lock.

5. Safety system according to Claims 2 to 4, **characterized in that** the activation arrangement (19) for mixing the components (17) of the adhesive system (18) is in the form of an easily axially tearable threaded joint (23) between the locking system (5) and the blocking cartridge (4) and the locking system (5) is provided with a drawknife arrangement (20) protruding into the reaction chamber (12).

6. Safety system according to Claim 2, **characterized in that** the activation system for mixing the individual components (17) of the adhesive system (18) is in the form of a pretensionable drawbar arrangement (24) with an impact tip (25) for striking in the reaction chamber (12).

7. Safety system according to Claim 2, **characterized in that** the activation system for mixing the individual components (17) of the adhesive system (18) is in the form of a percussion cap (27) disposed in the blocking cartridge (4) in front of the reaction chamber (12) with an impact bolt (28) that can be triggered by a shearing pin-spring arrangement (29, 31) for striking into the percussion cap (27).

8. Safety system according to Claim 2, **characterized in that** the cylindrical wall of the blocking cartridge (4) is provided with one to a plurality of O-rings (11) of elastic material.

9. Safety system according to Claim 2, **characterized in that** the collar (26) of the blocking cartridge (4) modelled on the blocking cartridge (4) of the hand gun (1) is of radially shortened and tapered form.

10. Safety system according to Claim 2, **characterized in that** the bottom of the blocking cartridge (4) is provided with a hard rubber pad (21).

11. Safety system according to Claim 2, **characterized in that** the connecting rod (8) is provided with a felt pad (22).

## Revendications

1. Système de protection contre une utilisation non autorisée d'une arme à feu portative, comprenant un récipient (4) à engager par emboîtement et verrouillage dans la chambre à cartouches (2) de l'arme à feu portative à protéger (1), **caractérisé en ce qu'**il est prévu dans le récipient une réserve interne de composants individuels (17) d'un système de colle (18), dont les composants individuels (17), dans le cas d'une tentative inappropriée d'ouverture et de manipulation du verrouillage et par mélange déclenchable de cette façon des composants individuels (17) du système de colle (18), sortent par des ouvertures (14) dans la paroi du récipient (4) en se dilatant dans la chambre à cartouches (2) et collent celle-ci avec le récipient (4) en empêchant toute nouvelle utilisation de l'arme à feu portative (1) jusqu'à la mise en oeuvre d'une technologie levant l'assemblage.

2. Système de protection selon la revendication 1, **caractérisé en ce que** le récipient (4) est une cartouche de blocage (4) simulant la douille de cartouche de l'arme à feu portative à protéger (1), qui peut être engagée dans la chambre à cartouches (2) de celle-ci, dans lequel la paroi munie de passages (14) de la cartouche de blocage (4) contient une chambre de réaction (12) avec une réserve de composants individuels (17) du système de colle (18) se trouvant à l'intérieur ainsi qu'un dispositif d'activation (19) pour le mélange des composants individuels (17) du système de colle (18) lors de la manipulation du système de protection et **en ce que** la cartouche de blocage (4) peut être verrouillée au moyen d'un dispositif de fermeture (5) raccordé du côté de la bouche, une tige de liaison (8) guidée axialement de façon rotative dans le canon de l'arme à feu portative (1) avec un panneton (9) à engager dans le dispositif de fermeture (5) et au moyen d'un cône de fermeture (6) avec serrure (7) recouvrant essentiellement par l'extérieur la bouche de l'arme à feu portative (1).

3. Système de protection selon la revendication 2, **caractérisé en ce que** le dispositif de fermeture (5) est réalisé sous la forme d'une serrure rotative destinée à recevoir et à verrouiller un panneton (9) agencé sur la tige de liaison (8).

4. Système de protection selon la revendication 2 ou 3, **caractérisé en ce que** le cône de fermeture (6) est lui-même réalisé sous la forme d'une serrure à combinaison de chiffres.

5. Système de protection selon une revendication 2 à 4, **caractérisé en ce que** le dispositif d'activation (19) est, pour le mélange des composants (17) du système de colle (18), réalisé sous la forme d'un assemblage vissé aisément frangible axialement (23) entre le dispositif de fermeture (5) et la cartouche de blocage (4) et le dispositif de fermeture (5) est muni d'un dispositif dynamomètre de traction (20) pénétrant dans la chambre de réaction (12).

6. système de protection selon la revendication 2, **caractérisé en ce que** le système d'activation pour le mélange des composants individuels (17) du système de colle (18) est réalisé sous la forme d'un dispositif de tirant à précontrainte (24) avec une pointe de percussion (25) pouvant s'enfoncer dans la chambre de réaction (12).

7. Système de protection selon la revendication 2, **caractérisé en ce que** le système d'activation pour le mélange des composants individuels (17) du système de colle (18) est réalisé sous la forme d'une capsule-amorce (27) disposée dans la cartouche de blocage (4) avant la chambre de réaction (12) avec des picots de percussion (28) pouvant s'enfoncer dans celle-ci et être déclenchés au moyen d'un dispositif à goupille de cisaillement et ressort (29, 31).

8. Système de protection selon la revendication 2, **caractérisé en ce que** la paroi cylindrique de la cartouche de blocage (4) est munie d'un à plusieurs joints toriques (11) en matériau élastique.

9. Système de protection selon la revendication 2, **caractérisé en ce que** la bordure (26) de la cartouche de blocage (4) simulée selon la cartouche de blocage (4) de l'arme à feu portative (1) est raccourcie radialement et réalisée en oblique.

10. Système de protection selon la revendication 2, **caractérisé en ce que** le fond de la cartouche de blocage (4) est muni d'un dépôt en caoutchouc dur (21).

11. Système de protection selon la revendication 2, **caractérisé en ce que** la tige de liaison (8) est munie d'un dépôt de feutre (22).
